# EUROPEAN PATENT SPECIFICATION

(11) **EP 2 234 846 B1**
(45) Date of publication and mention of the grant of the patent: **25.12.2013**
(21) Application number: 08705368.2
(22) Date of filing: 28.01.2008
(51) Int. Cl.: B60R 21/00, B60R 21/01, B60R 21/0136

(54) **A VEHICLE SENSOR SYSTEM**
FAHRZEUGSENSORSYSTEM
SYSTÈME DE CAPTEUR POUR AUTOMOBILE

(43) Date of publication of application: 06.10.2010
(73) Proprietor: Autoliv Development AB, 44783 Vårgårda (SE); Ford Global Technologies, LLC, Dearborn, MI 48126 (US)
(72) Inventor: ERB, Yannick, 97532 Weipoltshausen (DE); LE MERRER, Yann, F-75020 Paris (FR); TRIQUIGNEAUX, Sylvain, F-LYON 69008 (FR); WALLIN, Andreas, S-42738 Billdal (SE); HARDÅ, Peter, S-41324 Göteborg (SE)
(74) Representative: Beattie, Alex Thomas Stewart
(86) International application number: PCT/SE2008/050096
(87) International publication number: WO 2009/096828

(56) References cited:
- EP-A2- 1 604 870
- WO-A1-2006/125719
- WO-A1-2006/125719
- WO-A1-2008/031747
- WO-A1-2008/031747
- US-A- 4 842 301
- US-A- 4 842 301
- US-B1- 6 595 544

## Description

THIS INVENTION relates to a vehicle sensor system, and in particular relates to a vehicle sensor system for allowing an early detection of a vehicle impact.

When sensors are provided in a motor vehicle to determine whether the vehicle is involved in a crash situation, accelerometers are often used which are located at a central location within the vehicle. Safety devices to protect vehicle occupants, for instance air-bags and/or seat belt pretensioners, can then be activated if the acceleration, or integrated acceleration, detected by the accelerometer exceeds a preset threshold.

A drawback of this approach, however, is that the response of a centrally-located accelerometer to an impact is often delayed, since the peripheral parts of the vehicle are specifically designed to crumple and deform during an impact. During the time over which, for instance, the front part of a vehicle is deforming the acceleration sensed by a centrally-mounted accelerometer may be relatively low.

If vehicle safety systems are to be activated to protect vehicle occupants, it is important that they are activated as early as possible, to maximise the benefit derived from these systems.

After an impact has begun, but before significant deformation of the vehicle has occurred, acoustic vibrations are transmitted through structural parts of a vehicle, typically with a speed of around 5000 m/s. It has therefore been proposed to use sensors which are adapted to detect these vibrations, in order to sense impacts at an early stage.

EP1604870 discloses a method and device for sensing stress waves. One embodiment is a method that includes providing a support with at least one mount; attaching a semiconductor element containing a plurality of piezoresistors, each having impedance, to the support; connecting the support to a component by the at least one mount of the support; and sensing impedance of the plurality of piezoresistors.

It is an object of the invention to seek to provide an improved vehicle sensor system of this type.

Accordingly, one aspect of the present invention provides a vehicle sensor system comprising an acoustic sensor mounted on a structural element which is provided at a side of a cabin compartment of a vehicle, the cabin compartment comprising rigidly interconnected structural elements surrounding occupants of the vehicle, the acoustic sensor being located on a diagonal crossbar of a side door of the vehicle, the output of the acoustic sensor being analysed by an evaluation unit which evaluates the signal to determine whether a trigger signal should be output to activate an occupant protection device, the evaluation unit analysing a range of frequencies of vibrations sensed by the acoustic sensor, the lower limit of the range being at least 1 kHz.

Preferably, the lower limit of the range is at least 5kHz.

Advantageously, the lower limit of the range is at least 10kHz.

Preferably, the width of the range of frequencies that is analysed is 10 to 20kHz.

Conveniently, the output from the acoustic sensor is split into at least two separate frequency ranges for analysis.

Advantageously, the range of analysed frequencies falls at least substantially within the range 50-500kHz

Advantageously, for the or each frequency range being analysed, the signal from the acoustic sensor is rectified and has a low pass filter applied thereto, to produce an envelope signal.

Preferably, the envelope signal is compared against a preset threshold, the trigger signal being generated if the envelope signal exceeds the threshold.

Advantageously, the system further comprises an accelerometer located at a side surface of the vehicle, and wherein the trigger signal will not be generated unless the acceleration sensed by the accelerometer exceeds a preset acceleration threshold.

Preferably, the system further comprises a pressure sensor located at a side surface of the vehicle, and wherein the trigger signal will not be generated unless the pressure sensed by the pressure sensor exceeds a preset pressure threshold.

In order that the present invention may be more readily understood, embodiments thereof will now be described, by way of example, with reference to the accompanying drawings in which:
Figures 1 and 2 are schematic views of parts of a vehicle; and
Figure 3 is a schematic view of a decision-making process for use with the sensor system embodying the present invention.

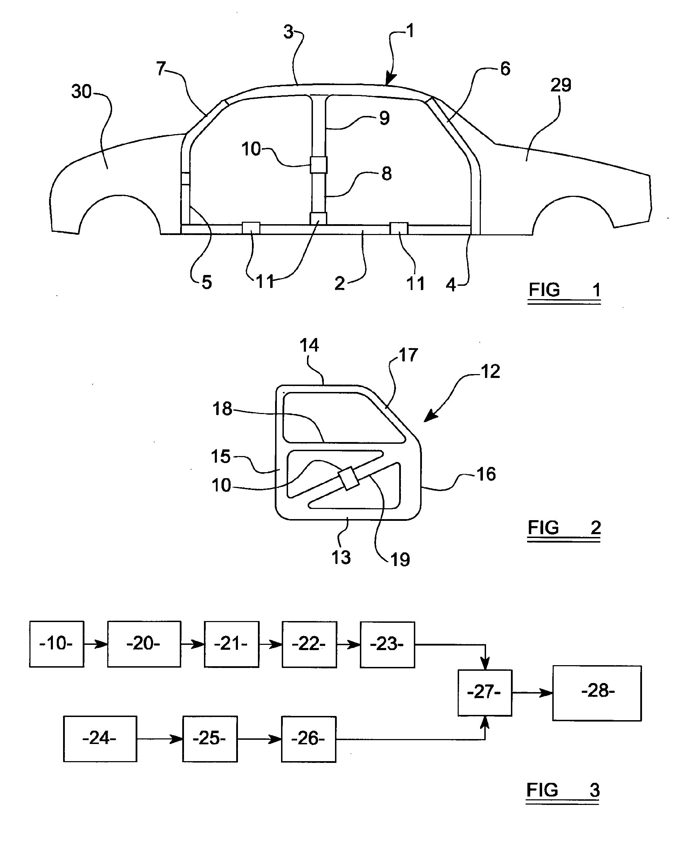

With reference firstly to figure 1, a schematic view is shown of structural parts of a vehicle. The vehicle includes a cabin compartment 1, which is formed from robust components that are welded to one another to form a cage around vehicle occupants. The cabin compartment 1 will therefore contain some or all of the seats which are provided for vehicle occupancy. A side portion of the cabin compartment comprises a floor strut 2, a ceiling strut 3, front and rear struts 4,5, which include A and C pillars 6,7 respectively, and an intermediate side strut 8, which extends from the floor strut 2 to the ceiling strut 3 and includes a B pillar 9.

Disposed forwardly of the cabin compartment 1 is a forward crumple zone 29, and disposed rearwardly of the cabin compartment 1 is a rear crumple zone 30, as will be understood by those skilled in the art.

Figure 1 shows comparative examples of where to mount an acoustic vibration sensor 10 e.g. on the intermediate strut 8.

It will be appreciated that providing the acoustic sensor 10 on a structural element which is located at a side of the cabin compartment 1 means that acoustic vibrations travelling through the structural parts of the vehicle, which arise from a side impact, will reach the acoustic sensor 10 without significant distortion or attenuation thereof, and will also reach this acoustic sensor 10 in the minimum possible time.

It has been found that, when an acoustic sensor is provided at a central location of the vehicle, the acoustic waves travelling through the vehicle arising from a crash may be heavily damped and distorted when passing through junctions between structural parts. This problem is particularly acute for side impacts, where acoustic waves travelling between a side portion of the vehicle and a central portion of the vehicle may have to pass several junctions between structural parts.

Distortion also occurs when an acoustic wave is transmitted through structural parts of a vehicle, since different frequencies travel through the material at different speeds. Thus, further acoustic waves travel from a point of impact, the more distortion will be imposed upon the signal.

It will be appreciated that, by placing the acoustic sensor 10 on a structural part 8 located at the side of the cabin compartment 1, acoustic waves will travel to the acoustic centre 10 without travelling a great distance, and hence distortion will be minimised.

Alternative locations 11 for acoustic sensors are also shown in figure 1 according to a comparative example. Acoustic sensors may be placed on any structural component of the vehicle at side of the cabin compartment, but particularly may be placed at a junction between the intermediate strut 8 and a side floor strut 2, or on the side floor strut 2 itself.

With reference to figure 2, a schematic view is shown of structural components of a vehicle side door 12. The side door 12 is adapted to be attached to the cabin compartment 1, as will be understood. Stiff structural components of the vehicle side door are also considered to be included in the cabin compartment 1, once the door 12 is installed.

The structural components of the vehicle's side door 12 include a lower strut 13 and an upper strut 14, respective side struts 15,16, and a diagonal strut 17 which extends between the upper strut 14 and an upper end of one of the side struts 15, and is configured to lie against the A pillar 6 when the vehicle side door 12 is installed.

A horizontal reinforcing strut 18 is also provided, extending across the vehicle side door 12 at a level which corresponds to the top of the window sill, as well as diagonal reinforcing strut 19, which extends diagonally across a lower portion of the vehicle side door 12.

In accordance with the invention, an acoustic sensor 10 is provided on the diagonal strut 19.

This is because, if an acoustic sensor is mounted on the horizontal reinforcing strut 18, the sensor will deflect acoustic vibrations effectively regardless of the lateral position of the side impact, and if the acoustic sensor is mounted on one of the upright struts 15,16 the sensor will deflect acoustic vibrations effectively regardless of the height of the side impact. However, if the acoustic sensor 10 is mounted on the diagonal reinforcing strut 19, it is likely to perform effectively if the side impact occurs at any point on the side surface of the vehicle.

The acoustic sensor 10 outputs a signal which is entered into an evaluation unit, which evaluates data relating to the vibrations which are detected by the acoustic sensor 10. In preferred embodiments of the invention, vibrations are wholly or principally analysed within a frequency range which has a lower limit which is at least 1kHz. In other embodiments the lower limit may be at least 5kHz. In further embodiments of the invention, the lower limit of the range is above 10kHz.

It is preferred that the range is around 10 to 20 kHz wide, and therefore the upper end of the range is around 15 to 30kHz.

In preferred embodiments the range of analysed frequencies falls wholly, or at least substantially, within the range 50-500kHz (known as acoustic emission).

With reference to figure 3, a schematic view of a decision-making process for use in systems embodying the present invention is shown.

Firstly, a signal is generated by an acoustic sensor 10, as described above.

The signal is passed to a band pass filter 20, which removes parts of the frequency spectrum from the signal which are above or below the range of interest.

The filter signal is then passed to a diode 21, which removes "negative" portions of the signal. Alternatively a diode bridge may be used, which gives the absolute value of the signal.

The signal then passes to a low pass filter 22. The effect of the diode 21 and the low pass filter 22 is to produce an "envelope" signal representing the detected vibrations.

Finally, the signal is passed to a comparator 23, which provides a positive output if the intensity of the sensed vibrations exceed a preset threshold.

The intensity of various frequencies of vibrations, or of vibrations within frequency ranges, may also be analysed to determine the type of crash that is occurring, which may affect the triggering, or the mode of triggering, of the safety device.

In preferred embodiments of the invention, an accelerometer 24 is also provided, mounted on a side portion of the vehicle. The lateral acceleration experienced by the accelerometer 24 is determined by an integrator 25, and the result of this is analysed by a further comparator 26, which gives a positive output only if the integrated acceleration exceeds a further preset threshold.

The inputs from the first and second comparators 23,26 are input to an AND component 27, which provides a positive output only if its two inputs are, themselves, both positive. If the output of the AND component 27 is positive, an occupant protection device 28 will be activated, to protect one or more occupants of the vehicle. As discussed, the safety device 28 may comprise a side air-bag.

As an alternative to, or as well as, an accelerometer 24, a pressure sensor may also be located at a side surface of the vehicle. The occupant protection device 28 may be activated only if the pressure detected by the pressure sensor exceeds a preset threshold.

However, the system may operate without an additional accelerometer or pressure sensor, and the triggering of the safety device may be determined solely based on data from the acoustic sensor.

While the acoustic sensor must be positioned on a diagonal crossbar of a side door, it is not necessary for the acoustic sensor to be positioned on an outward-facing surface of the structural element. The acoustic sensor may be positioned anywhere on the diagonal crossbar, including on an inward-facing surface.

It will be appreciated that a plurality of acoustic sensors may be provided, each of which is mounted on the same, or a different, structural element at a side of the cabin compartment.

It will be appreciated that embodiments of the present invention will provide vehicle sensor systems which will react swiftly to side impacts, which could have great benefits for occupant safety.

## Claims

1. A vehicle sensor system comprising an acoustic sensor (10) mounted on a structural element which is provided at a side of a cabin compartment (1) of a vehicle, the cabin compartment (1) comprising rigidly interconnected structural elements surrounding occupants of the vehicle, the acoustic sensor (10) being located on a diagonal crossbar (19) of a side door (12) of the vehicle, the output of the acoustic sensor (10) being analysed by an evaluation unit which evaluates the signal to determine whether a trigger signal should be output to activate an occupant protection device, the evaluation unit analysing a range of frequencies of vibrations sensed by the acoustic sensor (10), the lower limit of the range being at least 1 kHz.

2. A system according to claim 1, wherein the lower limit of the range is at least 5 kHz.

3. A system according to claim 1, wherein the lower limit of the range is at least 10kHz.

4. A system according to any preceding claim, wherein the width of the range of frequencies that is analysed is 10 to 20kHz.

5. A system according to any preceding claim, wherein the range of analysed set frequencies falls at least substantially within the range 50-500kHz.

6. A system according to any preceding claim, wherein the output from the acoustic sensor (10) is split into at least two separate frequency ranges for analysis.

7. A system according to any preceding claim, wherein for the or each frequency range being analysed, the signal from the acoustic sensor (10) is rectified and has a low pass filter (22) applied thereto, to produce an envelope signal.

8. A system according to claim 7, wherein the envelope signal is compared against a preset threshold, the trigger signal being generated if the envelope signal exceeds the threshold.

9. A system according to any preceding claim, further comprising an accelerometer (24) located at a side surface of the vehicle, and wherein the trigger signal will not be generated unless the acceleration sensed by the accelerometer (24) exceeds a preset acceleration threshold.

10. A system according to any preceding claim, further comprising a pressure sensor located at a side surface of the vehicle, and wherein the trigger signal will not be generated unless the pressure sensed by the pressure sensor exceeds a preset pressure threshold.

## Patentansprüche

1. Fahrzeugsensorsystem mit einem akustischen Sensor (10), der an einem Strukturelement angebracht ist, das auf einer Seite eines Kabinenabteils (1) eines Fahrzeugs vorgesehen ist, wobei das Kabinenabteil (1) starr untereinander verbundene Strukturelemente umfasst, die die Insassen des Fahrzeugs umgeben, wobei sich der akustische Sensor (10) auf einer diagonalen Querstange (19) einer Seitentür (12) des Fahrzeugs befindet, wobei die Ausgabe des akustischen Sensors (10) von einer Auswertungseinheit analysiert wird, die das Signal zum Bestimmen, ob ein Auslösesignal ausgegeben werden sollte, um eine Insassenschutzvorrichtung zu aktivieren, auswertet, wobei die Auswertungseinheit einen Bereich von Vibrationsfrequenzen analysiert, die von dem akustischen Sensor (10) erfasst werden, wobei die untere Grenze des Bereichs zumindest 1 kHz beträgt.

2. System nach Anspruch 1, wobei die untere Grenze des Bereichs zumindest 5 kHz beträgt.

3. System nach Anspruch 1, wobei die untere Grenze des Bereichs zumindest 10 kHz beträgt.

4. System nach irgendeinem vorhergehenden Anspruch, wobei die Breite des Bereichs von Frequenzen, der analysiert wird, 10 bis 20 kHz beträgt.

5. System nach irgendeinem vorhergehenden Anspruch, wobei der Bereich analysierter eingestellter Frequenzen zumindest im Wesentlichen in den Bereich von 50-500 kHz fällt.

6. System nach irgendeinem vorhergehenden Anspruch, wobei die Ausgabe vom akustischen Sensor (10) zur Analyse in zumindest zwei separate Frequenzbereiche gespalten wird.

7. System nach irgendeinem vorhergehenden Anspruch, wobei für den oder jeden Frequenzbereich, der analysiert wird, das Signal vom akustischen Sensor (10) gleichgerichtet wird und ein Tiefpassfilter (22) hat, das auf es angewendet wird, um ein Hüllsignal zu erzeugen.

8. System nach Anspruch 7, wobei das Hüllsignal mit einer voreingestellten Schwelle verglichen wird, wobei das Auslösesignal erzeugt wird, wenn das Hüllsignal die Schwelle überschreitet.

9. System nach irgendeinem vorhergehenden Anspruch, ferner mit einem Akzelerometer (24), das sich auf einer Seitenfläche des Fahrzeugs befindet, und wobei das Auslösesignal nicht erzeugt wird, wenn nicht die vom Akzelerometer (24) erfasste Beschleunigung eine voreingestellte Beschleunigungsschwelle überschreitet.

10. System nach irgendeinem vorhergehenden Anspruch, ferner umfassend einen Drucksensor, der sich auf einer Seitenfläche des Fahrzeugs befindet, und wobei das Auslösesignal nicht erzeugt wird, wenn nicht der vom Drucksensor erfasste Druck eine voreingestellte Druckschwelle überschreitet.

## Revendications

1. Système de capteur pour véhicule comprenant un capteur acoustique (10) monté sur un élément de structure prévu d'un côté d'un habitacle (1) d'un véhicule, l'habitacle (1) comprenant des éléments de structure interconnectés de manière rigide autour des occupants du véhicule, le capteur acoustique (10) étant situé sur une barre transversale diagonale (19) d'une porte latérale (12) du véhicule, la sortie du capteur acoustique (10) étant analysée par un module d'évaluation qui évalue le signal pour déterminer s'il faut produire en sortie un signal de déclenchement visant à activer un dispositif de protection des occupants, le module d'évaluation analysant une plage de fréquences des vibrations captées par le capteur acoustique (10), la limite inférieure de la plage étant d'au moins 1 kHz.

2. Système selon la revendication 1, dans lequel la limite inférieure de la plage est d'au moins 5 kHz.

3. Système selon la revendication 1, dans lequel la limite inférieure de la plage est d'au moins 10 kHz.

4. Système selon l'une quelconque des revendications précédentes, dans lequel la largeur de la plage de fréquences analysée va de 10 à 20 kHz.

5. Système selon l'une quelconque des revendications précédentes, dans lequel la plage des fréquences définies analysées est comprise au moins en grande partie dans la plage allant de 50 à 500 kHz.

6. Système selon l'une quelconque des revendications précédentes, dans lequel la sortie du capteur acoustique (10) est divisée en au moins deux plages de fréquences distinctes en vue de l'analyse.

7. Système selon l'une quelconque des revendications précédentes, dans lequel pour la plage de fréquences ou chacune des plages de fréquences analysées, le signal du capteur acoustique (10) est redressé et un filtre passe-bas (22) lui est appliqué afin de produire un signal à enveloppe.

8. Système selon la revendication 7, dans lequel le signal à enveloppe est comparé à un seuil prédéfini, le signal de déclenchement étant généré si le signal à enveloppe dépasse le seuil.

9. Système selon l'une quelconque des revendications précédentes, comprenant en outre un accéléromètre (24) situé sur une surface latérale du véhicule, et dans lequel le signal de déclenchement n'est pas généré tant que l'accélération détectée par l'accéléromètre (24) ne dépasse pas un seuil d'accélération prédéfini.

10. Système selon l'une quelconque des revendications précédentes, comprenant en outre un capteur de pression situé sur une surface latérale du véhicule, et dans lequel le signal de déclenchement n'est pas généré tant que la pression détectée par le capteur de pression ne dépasse pas un seuil de pression prédéfini.
